# EUROPEAN PATENT APPLICATION

(11) **EP 4 814 767 A1**
(43) Date of publication of application: **30.09.2026**
(21) Application number: 26168351.0
(22) Date of filing: 27.03.2026
(51) Int. Cl.: G06F 21/57, G06F 8/71, G06F 8/77

(54) **SYSTEMS AND METHODS FOR ANALYZING AND ASSESSING RISK FROM SOFTWARE CONTRIBUTORS FOR OPEN-SOURCE SOFTWARE**

(30) Priority: 27.03.2025 US 202563779263 P; 16.07.2025 US 202519271045
(71) Applicant: Strider Technologies, Inc., South Jordan, UT 84095 (US)
(72) Inventor: Zinn, Michael, Sammamish (US); McNamara, Mark, Pocatello (US); Brown, Michael, Broadlands (US); Keil, Dan, Reston (US)
(74) Representative: Eisenführ Speiser

(57) **Abstract**

Techniques are disclosed that allow enhancing the technical reliability of technical devices on which code should be running. In embodiments, contributors to an open-source repository are reviewed against a risk methodology, based on the attributes of an individual that has been derived to be a contributor to the repository. In embodiments, profiles are created for each such individual, wherein, once a respective profile has been constructed, it may then be run through a novel risk methodology, e.g., looking at various attributes of the individual, their known associations, and/or publications to render an overall risk score for the individual contributor. In embodiments, if the risk score exceeds a predefined threshold, a remedial action can be initiated with respect to code contributed by the individual contributor. This can allow for an improved overall code to be run on the technical devices, thereby allowing to enhance their technical reliability.

## Description

### CROSS-REFERENCE TO RELATED APPLICATIONS

This application claims priority to the U.S. Provisional Patent Application bearing Serial Number 63/779,263, titled, "Systems and Methods for Analyzing and Assessing Risk from Software Contributors for Open-Source Software," and filed March 27, 2025, the contents of which are incorporated herein by reference in their entirety.

### BACKGROUND

Entities, such as companies or individuals, increasingly need to develop, build, and deploy software to meet business needs. However, business software can often include or incorporate so-called "open-source" software modules, which may have been contributed to by various known (and unknown) software developers from around the globe over the span of months or years of development.

However, with the advent of open-source software libraries being produced in a prolific manner (e.g., via the GitHub service), hundreds of millions of developers have now contributed code to millions of different open-source projects. As such, it is not always possible to vet all of the contributors to a given open-source repository from a security or risk standpoint. When code from unvetted contributors is incorporated into a software project, the resulting software may exhibit unpredictable behavior, degraded performance, or outright malfunction when executed on a computing device. Such problematic code could be intentionally malicious or it could be code contributed by individuals lacking sufficient expertise, operating under inadequate quality assurance processes, or otherwise associated with entities that do not adhere to established software engineering standards. Whether intentionally harmful or merely defective, such problematic code can compromise the correct operation of a technical device on which the affected software is deployed, potentially with severe consequences. For example, if an automobile relies on software including a compromised or defective open-source software module, safety-critical vehicle functions may fail or behave erratically. In the field of medical devices, such as patient monitoring systems, infusion pumps, or diagnostic imaging equipment, the integration of defective open-source code may lead to inaccurate readings, device malfunctions, or interruptions in patient care. As another example, smartphones which execute applications incorporating affected open-source modules may experience crashes, data corruption, or loss of communication capability.

Accordingly, improved techniques for analyzing and assessing risk from software contributors for open-source software are desirable, especially because this allows enhancing the technical reliability of technical devices on which corresponding code should be running.

### SUMMARY

Methods and systems are disclosed to review the contributors to an open-source repository against a risk methodology, e.g., based on the attributes of the individual(s) that have been derived to be a contributor from various open sources. In embodiments, a software repository URL may be obtained and then analyzed to determine the individuals who have contributed source code to that repository. Next, the references in that repository may be cross-referenced to other included repositories, as a large number of repositories often include other repositories, known as "dependencies" (and their transitive dependencies).

Once a set of contributors to an open-source software repository of interest has been derived, the potentially-identifying information related to such contributors (e.g., usernames, email addresses, names, work affiliations, blog, other social networking handles, etc.) may be taken, and a matching process may be initiated against multiple different databases that take those potentially-identifying information values and attempt to resolve them to a particular individual's resume or curriculum vitae (also referred to herein as a "CV"). In some cases, the compiled information for an individual contributor may not result in the location of full CV data, and, instead, the profile built up for that contributor may only contain a subset of typical CV-style information, e.g., name, email, company affiliation, etc. Once the profile has been constructed for an individual contributor, it may then be run through a novel risk methodology, looking at various attributes of the individual, their known associations, and/or their publications to render an overall risk score (or risk classification level) for the individual contributor.

In addition to evaluating the comprehensive risk associated with open-source repositories and their contributors, the present system is configured to accept an individual open-source contributor profile as input, extract the contributor's open-source contributions, and perform a detailed risk analysis. This analysis determines potential associations or collaborations with entities that are recognized to pose security risks. Consequently, the system identifies individuals that are directly or indirectly compromised or are probable targets for adversarial security threat actors.

In an aspect of the present invention, a computer-implemented method is presented, comprising: obtaining a software repository, analyzing the obtained software repository to determine individuals who have contributed code to the obtained software repository, extracting identifying information of the individuals who have been determined to be contributors of code to the obtained software repository, matching the extracted identifying information of the determined contributors against one or more risk databases, assigning one or more risk signals to the determined contributors based on the matching, calculating a risk score for the determined contributors based, at least in part, on the assigned risk signals, and applying the calculated risk scores for the determined contributors to pre-established risk threshold levels. By determining the individuals who have contributed code to the software repository and matching their identifying information against risk databases, the method enables the identification of code contributions originating from contributors who are associated with entities that may lack established software engineering standards or quality assurance processes, or who may otherwise pose a risk of introducing defective or compromised code into the software repository. The method can thus reduce the probability that software containing defective or compromised code contributions is deployed on technical devices, thereby enhancing their technical reliability. For instance, in response to determining that the calculated risk score of a determined contributor exceeds a pre-established risk threshold level, at least one remedial action with respect to code contributed by the determined contributor may be initiated, in particular automatically or semi-automatically. The at least one remedial action may comprise one or more of: (i) blocking the code contributed by the determined contributor, (ii) isolating the code contributed by the determined contributor in a sandboxed execution environment, (iii) preventing deployment of software incorporating the code contributed by the determined contributor to a target computing device, (iv) automatically reverting or removing the code contributed by the determined contributor from a software build, (v) restricting execution privileges of software modules containing code contributed by the determined contributor, or (vi) triggering an automated static code analysis or security scan of the code contributed by the determined contributor.

In an embodiment, the software repository comprises an open-source software repository.

In an embodiment, analyzing the obtained software repository to determine individuals who have contributed code to the obtained software repository further comprises analyzing one or more of: names, usernames, or email addresses of individuals who have contributed code to the obtained software repository.

In an embodiment, the identifying information of the individuals who have been determined to be contributors of code to the obtained software repository comprises one or more of: names, email addresses, phone numbers, governmental affiliations, or organizational affiliations.

In an embodiment, the one or more risk databases comprise one or more of: a resume database, a research publication database, a database of individual affiliations with governmental security organizations, a database of individual affiliations with intelligence agencies, or a database of individual affiliations with cyberterrorism groups.

In an embodiment, the risk score comprises a quantitative risk score.

In an embodiment, the method further comprises: classifying a risk level for each of the determined contributors based on the applying of the respective calculated risk scores to the pre-established risk thresholds.

In an embodiment, calculating a risk score for the determined contributors further comprises: weighting the respective one or more assigned risk signals for each determined contributor.

In an embodiment, the weighting is based on at least one of: a risk signal frequency, a risk signal impact level, or a type of risk signal.

In an embodiment, the one or more assigned risk signals comprise at least one of the following: (a) an indication of a contributor's affiliation with organizations that support particular foreign government actors in recruiting or training personnel for militaries and intelligence services, conducting cyber operations, or contributing to research and development of cyber weapons, (b) an indication of a contributor's affiliation with particular foreign governmental security or intelligence agencies, (c) an indication of a contributor's affiliation with an organization that appears on a list of registered defense industry suppliers or bidders maintained by a particular foreign government, or (d) an indication of a contributor's affiliation with research institutions or universities associated with military research for a particular foreign government.

In a further aspect of the present invention, a non-transitory program storage device (NPSD) is presented, comprising computer readable instructions executable by one or more processors to: obtain a software repository, analyze the obtained software repository to determine individuals who have contributed code to the obtained software repository, extract identifying information of the individuals who have been determined to be contributors of code to the obtained software repository, match the extracted identifying information of the determined contributors against one or more risk databases, assign one or more risk signals to the determined contributors based on the matching, calculate a risk score for the determined contributors based, at least in part, on the assigned risk signals, and apply the calculated risk scores for the determined contributors to pre-established risk threshold levels.

In an embodiment, the instructions to analyze the obtained software repository to determine individuals who have contributed code to the obtained software repository further comprise instructions to analyze one or more of: names, usernames, or email addresses of individuals who have contributed code to the obtained software repository.

In an embodiment, the identifying information of the individuals who have been determined to be contributors of code to the obtained software repository comprises one or more of: names, email addresses, phone numbers, governmental affiliations, or organizational affiliations.

In an embodiment, the one or more risk databases comprise one or more of: a resume database, a research publication database, a database of individual affiliations with governmental security organizations, a database of individual affiliations with intelligence agencies, or a database of individual affiliations with cyberterrorism groups.

In an embodiment, the one or more assigned risk signals comprise at least one of the following: (a) an indication of a contributor's affiliation with organizations that support particular foreign government actors in recruiting or training personnel for militaries and intelligence services, conducting cyber operations, or contributing to research and development of cyber weapons, (b) an indication of a contributor's affiliation with particular foreign governmental security or intelligence agencies, (c) an indication of a contributor's affiliation with an organization that appears on a list of registered defense industry suppliers or bidders maintained by a particular foreign government, or (d) an indication of a contributor's affiliation with research institutions or universities associated with military research for a particular foreign government.

In another aspect of the present invention, a system is presented, comprising: an electronic storage component, a user interface device, and one or more processors operatively coupled to the electronic storage component, wherein the one or more processors are configured to execute instructions causing the one or more processors to: obtain a software repository, analyze the obtained software repository to determine individuals who have contributed code to the obtained software repository, extract identifying information of the individuals who have been determined to be contributors of code to the obtained software repository, match the extracted identifying information of the determined contributors against one or more risk databases, assign one or more risk signals to the determined contributors based on the matching, calculate a risk score for the determined contributors based, at least in part, on the assigned risk signals, and apply the calculated risk scores for the determined contributors to pre-established risk threshold levels.

In an embodiment, the one or more processors are further configured to execute instructions causing the one or more processors to: classify a risk level for each of the determined contributors based on the applying of the respective calculated risk scores to the pre-established risk thresholds.

In an embodiment, the instructions causing the one or more processors to calculate a risk score for the determined contributors further comprise instructions causing the one or more processors to: weight the respective one or more assigned risk signals for each determined contributor.

In an embodiment, the weighting of the respective one or more assigned risk signals for each determined contributor is based on at least one of: a risk signal frequency, a risk signal impact level, or a type of risk signal.

In an embodiment, the one or more assigned risk signals comprise at least one of the following: (a) an indication of a contributor's affiliation with organizations that support particular foreign government actors in recruiting or training personnel for militaries and intelligence services, conducting cyber operations, or contributing to research and development of cyber weapons, (b) an indication of a contributor's affiliation with particular foreign governmental security or intelligence agencies, (c) an indication of a contributor's affiliation with an organization that appears on a list of registered defense industry suppliers or bidders maintained by a particular foreign government, or (d) an indication of a contributor's affiliation with research institutions or universities associated with military research for a particular foreign government.

It shall be understood that the computer-implemented method of claim 1, the non-transitory program storage device of claim 12 and the system of claim 15 have similar and/or identical preferred embodiments, particularly as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

The accompanying drawings, which are incorporated in and constitute a part of this specification, illustrate embodiments and together with the description, serve to explain the principles of the methods and systems:
FIG. 1 illustrates a block diagram of an example environment.
FIG. 2 illustrates an example method for rendering a risk score for an individual contributor to an open-source software repository.
FIG. 3 illustrates a block diagram of an example computing device.

### DETAILED DESCRIPTION OF ILLUSTRATIVE EMBODIMENTS

Current software risk assessment solutions do not offer insight into individual open-source contributors, e.g., based on their identity, possible motivations, and/or known affiliations. Rather, they merely evaluate known vulnerabilities and adopt open-source best practices. With the assessment of "contributor" risk (i.e., the risk level associated with software code contributed by a specific individual), adopters of the techniques disclosed herein will gain additional insight into risk that was otherwise previously unknown. The benefits of the present technical solutions include the ability to allow adopters of such solutions to make faster and more informed decisions and risk assessments regarding which software repositories (e.g., open-source software repositories including code contributed by individuals outside of the organization) are kept out of their software supply chain while also understanding unforeseen risks within their own employees that are actively involved in the open-source community. Additionally, further technical and/or procedural restrictions may be placed around how any "higher risk" repositories are integrated and operated within the organization's larger tech stack.

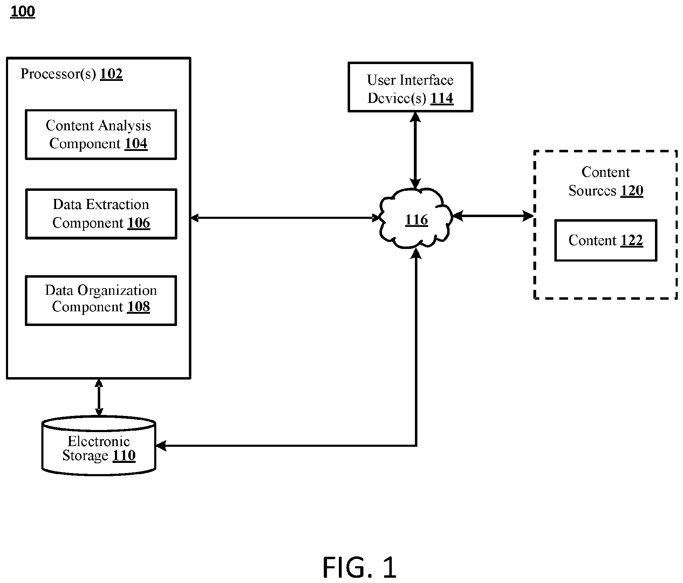

FIG. 1 illustrates an example hardware and network configuration, in which the systems and methods described herein may be implemented. Such a hardware and network system 100 includes a processor 102, a database 110, at least one user interface device 114, and at least one content source 120. The processor 102, database 110, at least one user interface device 114, and at least one content source 120 are in communication via a network 116. The processor 102 may be in communication with the database 110. The processor 102 may cause data to be stored in the database 110 and/or receive data stored in the database 110. The database 110 may store a variety of different data.

The processor 102, electronic storage 110, user interface device(s) 114, and content source(s) 120 may each comprise one or more computing devices and/or network devices. The network 116 may comprise one or more public networks (e.g., the Internet) and/or one or more private networks. A private network may include a wireless local area network (WLAN), a local area network (LAN), a wide area network (WAN), a cellular network, or an intranet. The network 116 may comprise wired network(s) and/or wireless network(s).

The processor 102 may be configured to receive, capture and categorize data. The processor 102 may include a variety of different components. For example, the processor may include a content analysis component 104, a data extraction component 106, and/or a data organization component 108. One or more of these components 104, 106, 108 may be used to capture and categorize data from a large quantity of data sources, e.g., online open-source software repositories.

In embodiments, the processor 102 includes the content analysis component 104. The content analysis component 104 may be configured to receive content 122 from the content source(s) 120. The content 122 may include digital content or non-digital content that may be digitized. For example, the content 122 may include documents, files, articles, resumes, CVs, webpages, etc. The content source(s) 120 may include any source of digital or non-digital content, including but not limited to website providers, digital content providers, books, brochures, pamphlets, resume repositories, etc. There may be tens, hundreds, thousands, or millions of content sources 120. To receive the content 122, the content analysis component 104 may retrieve the content 122. Alternatively, the content 122 may be sent to the content analysis component 104.

The content analysis component 104 may be configured to determine whether received content 122 includes one or more risk signals. A risk signal, as used herein, refers to an indicator of a risk level for a particular code contributor (e.g., based on name, username, email address, etc.) to an open-source repository. If the content analysis component 104 determines that one or more risk signals are associated with a particular contributor, the content analysis component 104 may be configured to further calculate a quantitative risk score. In embodiments, this may be done by applying a hybrid scoring model, e.g., a model that weights risks based on various risk ranking methodologies and state/corporate/university associations or affiliations.

In certain embodiments, the content analysis component 104 may also determine a language associated with the content. For example, the content analysis component 104 may determine whether the content contains English, Spanish, French, Russian, Mandarin, etc. The content analysis component 104 may determine whether the presence of a particular language is associated with a higher level or lower level of contributor risk.

If the content analysis component 104 determines that a given contributor is assigned a quantitative risk score that exceeds one or more pre-established threshold levels, an appropriate notification, exclusion, or other remedial action may be taken. For example, in some embodiments, the pre-established threshold levels may correspond to: a very high risk level; a high risk level; a medium risk level; and a low risk level. In some embodiments, anything above a low risk level may be referred for appropriate notification, exclusion, or other remedial action. In particular, in response to determining that the calculated risk score of a determined contributor exceeds a pre-established risk threshold level, for instance a low risk level, at least one remedial action with respect to code contributed by the determined contributor may be initiated, in particular automatically. The at least one remedial action may comprise one or more of: (i) blocking the code contributed by the determined contributor, (ii) isolating the code contributed by the determined contributor in a sandboxed execution environment, (iii) preventing deployment of software incorporating the code contributed by the determined contributor to a target computing device, (iv) automatically reverting or removing the code contributed by the determined contributor from a software build, (v) restricting execution privileges of software modules containing code contributed by the determined contributor, or (vi) triggering an automated static code analysis or security scan of the code contributed by the determined contributor.

In embodiments, the processor 102 includes the data extraction component 106. If the content analysis component 104 determines that one or more pieces of received content 122 includes information relevant to multiple different contributing individuals, the content analysis component 104 may be configured to send (i.e., forward) the information to the data extraction component 106. The data extraction component 106 may be configured to receive and parse the information, such that appropriate risk signals gleaned from the underlying received content 122 are each associated with the appropriate individual(s), for whom a quantitative risk score is being calculated. The manner in which the extracted risk signals and other information are associated with the appropriate individual contributor is described in more detail below.

The data extraction component 106 may be configured to extract any or all potentially-relevant and/or contributor-identifying information from received content 122. For example, if the received content 122 reflects that a given individual has an association with particular high-risk organizations (e.g., an organization that supports governmental actors in recruiting or training personnel for militaries and/or intelligence services, conducting cybersecurity or cyberterrorism operations, etc.), that extracted information may be used by content analysis component 104 to increase the individual's quantitative risk score appropriately.

In embodiments, the processor 102 may also include a data organization component 108. The data organization component 108 may be configured to organize the extracted data according to personal name, username, and/or email address (i.e., by individual). For example, the data organization component 108 may create a hash of the personal name/username/email address in a particular row and associate all of the other raw data indicative of risk levels in that row to the personal name/username/email address. In this manner, the data organization component 108 may invert the extracted data so that it is arranged according to individuals. Arranging the extracted data according to individual may provide an entity with the ability to gain a quick and comprehensive overview of the personal details associated with a particular individual and, thus, more readily assess their risk level as an open-source software contributor. In particular, to associate extracted data including risk signals gleaned from received content 122 with the appropriate individual contributor, the data organization component 108 may utilize one or more unique identifiers extracted from the software repository. A unique identifier may be a hash as described above. Alternatively, a contributor's personal name, username or email address may directly be used as association keys. For example, when the obtained software repository is analyzed, each code contribution, for instance, a commit in a version control system, may include metadata specifying at least an author name and an author email address. The data organization component 108 may normalize these identifiers, for instance, by converting email addresses to a canonical lowercase format and removing whitespace or typographic variations from names, and use the normalized identifiers to create or update an individual contributor record in the database 110. When risk-relevant information is subsequently extracted from received content 122 by the data extraction component 106, for instance, a resume entry, a publication, or an organizational affiliation record retrieved from an external content source 120, the data organization component 108 may match one or more identifiers found within the extracted information against the stored contributor records by comparing, for example, personal names, usernames or email addresses contained in the extracted information or a corresponding hash with corresponding fields in the contributor records. Where an exact match is found, the risk-relevant information is associated with the matching contributor record. Where no exact match is found but a partial overlap exists, such as a matching email address but a different name spelling, the data organization component 108 may apply approximate string matching techniques, such as edit-distance-based comparisons, to determine whether the extracted information likely pertains to an existing contributor record, and, if so, associate the extracted risk-relevant information accordingly.

In embodiments, the data organization component 108 may be configured to send the organized data or persist the organized data to electronic storage, e.g., database(s) 110. The database(s) 110 may receive the organized data and maintain it in profiles according to personal name. For example, the database(s) 110 may receive all risk-related information associated with particular individuals who may have contributed code to the relevant open-source software repositories. The individuals' profile(s) and/or associated quantitative risk scores may then be viewed, such as by an entity, via one or more user interface device(s) 114. The user interface device(s) 114 may include at least one of a tablet, phone, smart phone, computer, laptop, television, etc. The organized data, including the individuals' profiles and associated quantitative risk scores, may also be retrieved automatically by one or more automated systems, such as a build server, a deployment controller, or a continuous integration server, that are in communication with the database 110 via the network 116. Such an automated system may be configured to query the database 110 periodically or in an event-driven manner for contributor risk scores associated with a particular contributor to a software repository and to compare the retrieved risk scores against one or more pre-established risk threshold levels. In response to determining that a retrieved risk score exceeds a pre-established risk threshold level, the automated system may automatically initiate one or more remedial actions as described above, in particular without requiring human intervention.

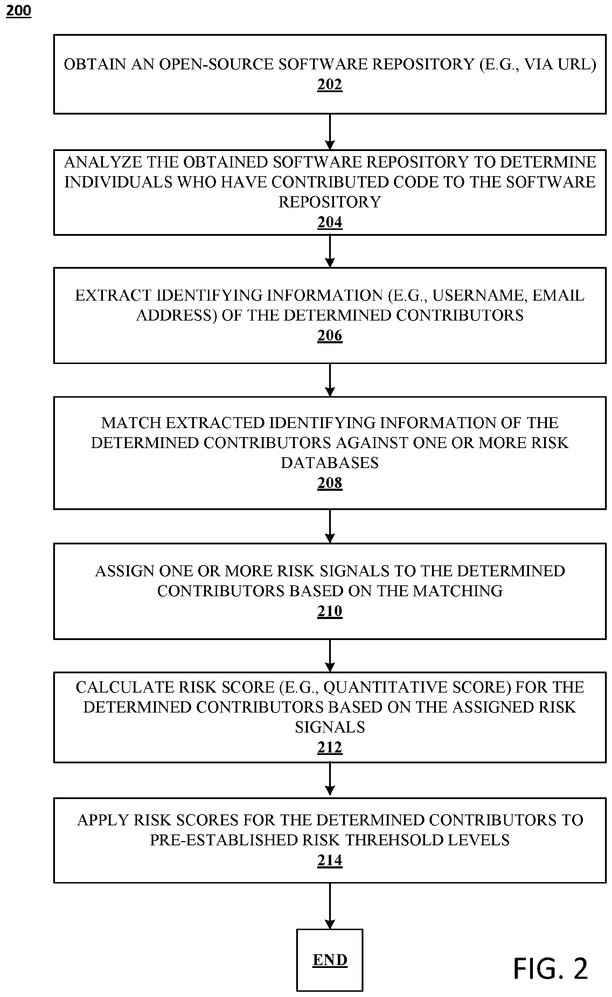

Figure 2 illustrates an exemplary method 200 for rendering a risk score for an individual contributor to an open-source software repository. The method 200 may be performed, for example, by the processor 102 of FIG. 1. The method 200 may be performed to determine a quantitative and/or "functional" risk level of one or more contributors to a given software repository. In some implementations, the techniques described herein may be integrated directly into an organization's existing software offerings, thus enabling the organization to analyze single repositories and their dependencies-or even to submit their entire software supply chain to a secure third-party server for risk analysis. In still other implementations, the techniques described herein may be made available via an application programming interface (API), i.e., to enable organizations to conduct real-time risk analysis of their software and to protect against previously unforeseen risks.

As described above, at 202, a processor (e.g., the content analysis component 104) may be configured to obtain an open-source software repository (e.g., via URL). Obtaining the software repository may comprise cloning the software repository by means of a version control protocol, such as the Git protocol, thereby retrieving the complete version control history of the repository including all commit metadata. Obtaining the software repository may comprise retrieving at least the version control history and the commit metadata of the repository. The commit metadata typically includes the author name and the author email address associated with each code contribution, which may serve as the basis for determining the individuals who have contributed code to the repository. At 204, the repository may be analyzed to determine individuals who have contributed code to the repository. In embodiments, this may further comprise including individuals who are contributors to other repositories that are cross-referenced in the obtained repository, i.e., a process known as dependency tracking or transitive dependency tracking.

At 206, the method 200 may extract identifying information (e.g., username, email address, etc.) of the determined contributors. At 208, the method 200 may match the extracted identifying information of the determined contributors against one or more risk databases. The one or more risk databases may be or may comprise databases that identify or contain resumes, publications, and/or affiliations of individuals associated with government security organizations, intelligence agencies, cyberterrorism, the development of cyber weapons, etc. The one or more risk databases may further comprise entries derived from a software incident database that records instances in which software exhibited malfunctions, failures, security breaches, or degraded performance, and that allows for associating such incidents with the specific contributors whose code was involved in the affected software modules. For instance, the one or more risk databases may comprise entries derived from a vulnerability database, such as a database of Common Vulnerabilities and Exposures, also known as CVE database. A CVE database may catalogue known software vulnerabilities and associate them with the affected software product and version. By performing a line level attribution analysis on the affected code, such as a git blame operation, the relevant code lines may be traced back to a contributor who authored them. The one or more risk databases may comprise the back-traced contributors and link them to the entries of the vulnerability database. The one or more risk databases may thus comprise a project history database that specifically associates open source projects which experienced reliability issues or security incidents with a given contributor, and this association may result in the assignment of one or more corresponding risk signals at step 210.

At 210, the method 200 may assign one or more risk signals to the determined contributors based on the outcome of the matching operation. For example, an individual being associated with a governmental entity X may result in an assessment of a first number of risk points to the individual, whereas an individual being associated with a University entity Y may only result in an assessment of a second number of risk points to the individual (wherein the second number is lower than the first number, in this example). In embodiments, a hybrid scoring model may be applied that weights risks based on national intelligence-related ranking, e.g., a talent program risk may be rated as a higher risk than a university association. In other embodiments, a decay function may also be used to offset risks that carry higher frequency, but which are likely to be of less impact from a security risk assessment standpoint. For instance, the decay function may reduce the effective risk points of a given risk signal type in proportion to the number of occurrences of that risk signal type for a particular contributor. In this manner, a contributor who has, for example, ten low-impact conference attendances does not accumulate a disproportionately high risk score relative to a contributor who has a single high-impact intelligence agency affiliation.

At 212, method 200 may calculate a risk score (e.g., a quantitative risk score) for the determined contributors based on the respective assigned risk signals for the contributor. For instance, each type of risk signal may be associated with a predefined risk point value and a risk score for the individual may be calculated as the sum of the risk point values. The hybrid scoring model mentioned above may calculate the risk score as a weighted sum of the individual risk point values, wherein each risk point value is multiplied by a weight factor that reflects the assessed severity of the corresponding risk signal type. The weight factors may be derived from multiple independent ranking methodologies, such as a first ranking based on national security or intelligence threat assessments and a second ranking based on technical code quality and reliability indicators associated with the contributor, such as the contributor's historical defect density, the frequency of reverted commits, or documented software incidents attributable to the contributor's code. The hybrid scoring model may combine these rankings by averaging or otherwise aggregating the respective weight factors to produce a single composite weight for each risk signal type. The decay function described above may also be applied during the calculation of the risk score at step 212. In some embodiments, a risk score may be further refined based on a recency of the individual's last software "commit" (i.e., contribution) to the software repository being analyzed. For example, if an individual identifies as "high risk" but last committed code to a given software repository more than a threshold number of years ago (e.g., 5 years ago, 10 years ago, etc.), then reporting/further remedial actions may be avoided (or assigned a reduced weight).

Finally, at 214, method 200 may apply the calculated risk scores for the determined contributors to pre-established risk threshold levels. For example, as alluded to above, according to some risk detection schemes, a first pre-established risk threshold level may correspond to a "very high" risk level; a second pre-established risk threshold level (i.e., lower than the first level) may correspond to a "high" risk level; a third pre-established risk threshold level (i.e., lower than the first and second levels) may correspond to a "medium" risk level; and a fourth pre-established risk threshold level (i.e., lower than the first, second, and third levels) may correspond to a "low" risk level.

In some embodiments, a "very high" risk level may correspond to one or more affiliation ties risk signals. This type of risk signal identifies organizations that support or are affiliated with government actors in recruiting or training personnel for militaries and intelligence services, conducting cyber operations, or contributing to research and development of cyber weapons. The "very high" risk level may also correspond to one or more risk signals identifying a particular government security or intelligence agency, an organization in which a particular government's security or intelligence agency has an equity stake, or an organization that has a documented partnership with governmental-affiliated police or espionage organizations. The "very high" risk level may also correspond to one or more risk signals that identify that a majority parent, subsidiary, or sister company to an organization that appears on a list of registered defense industry suppliers maintained by a particular foreign government(s), an organization listed as a bidder on a procurement contract with particular foreign government(s), or a subordinate organization. In some embodiments, a "high" risk level may correspond to one or more risk signals associated with one or more corporate entities associated with particular foreign government(s) or espionage activities on behalf of particular foreign government(s). The "high" risk level may also correspond to one or more risk signals associated with research institutions or universities associated with military research in particular foreign governments. In some embodiments, a "medium" risk level may correspond to any risk signal methodologies indicative of a contributor's work scope (i.e., meaning any contributor for whom it has been identified that there is a direct relationship with an identified risk organization, e.g., currently or previously working for such an identified risk organization). In some embodiments, a "low" risk level may correspond to any other risk signal methodologies related to a contributor's non-work scope (e.g., participation in or a speaking engagement at a high risk event or conference, professional association or membership in an identified risk organization, and/or collaboration, research, or publication with other individuals associated with identified risk organizations).

In some embodiments, anything above a low risk level may be referred for appropriate notification, exclusion, or other remedial action. In particular, in response to determining that the calculated risk score of a determined contributor exceeds a pre-established risk threshold level, for instance a low risk level, at least one remedial action with respect to code contributed by the determined contributor may be initiated, in particular automatically. The at least one remedial action may comprise one or more of: (i) blocking the code contributed by the determined contributor, (ii) isolating the code contributed by the determined contributor in a sandboxed execution environment, (iii) preventing deployment of software incorporating the code contributed by the determined contributor to a target computing device, (iv) automatically reverting or removing the code contributed by the determined contributor from a software build, (v) restricting execution privileges of software modules containing code contributed by the determined contributor, or (vi) triggering an automated static code analysis or security scan of the code contributed by the determined contributor. Furthermore, the at least one remedial action may be selected based on the determined risk level. For instance, if the determined risk level is above a medium risk level, but not above a high risk level, the execution privileges of software modules containing code contributed by the determined contributor may be restricted and/or an automated static code analysis or security scan of the code contributed by the determined contributor may be initiated. Furthermore, if the determined risk level is above a high risk level, but not above a very high risk level, the code contributed by the determined contributor may be isolated in a sandboxed execution environment and/or deployment of software incorporating the code contributed by the determined contributor to a target computing device may be prevented. Moreover, if the determined risk level is above a very high risk level, the code contributed by the determined contributor may be blocked completely and/or the code contributed by the determined contributor may be automatically reverted or removed from a software build.

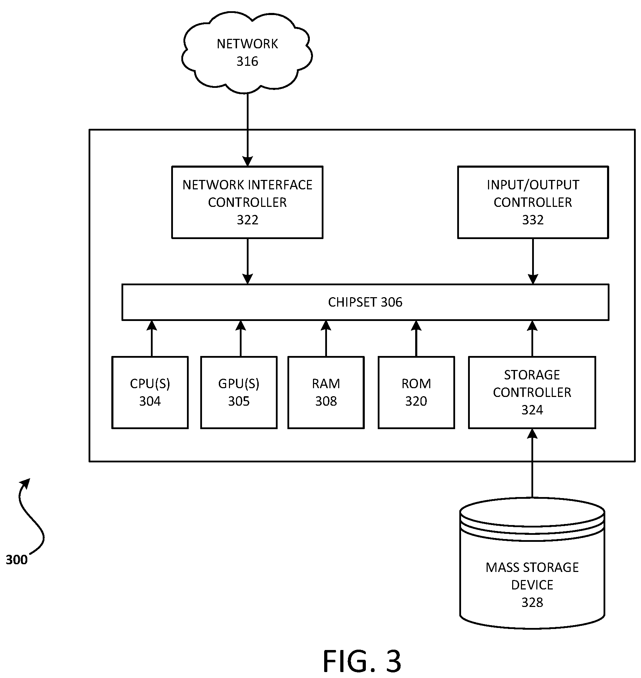

FIG. 3 depicts a computing device that may be used in various aspects. With regard to the example environment of FIG. 1, one or more of the processor 102, electronic storage 110, user interface device(s) 114, or content source(s) 120 may be implemented in an instance of a computing device 300 of FIG. 3. The computer architecture shown in FIG. 3 shows a conventional server computer, workstation, desktop computer, laptop, tablet, network appliance, PDA, e-reader, digital cellular phone, or other computing node, and may be utilized to execute any aspects of the computers described herein, such as to implement the methods described in FIG. 2.

The computing device 300 may include a baseboard, or "motherboard," which is a printed circuit board to which a multitude of components or devices may be connected by way of a system bus or other electrical communication paths. One or more central processing units (CPUs) 304 may operate in conjunction with a chipset 306. The CPU(s) 304 may be standard programmable processors that perform arithmetic and logical operations necessary for the operation of the computing device 300.

The CPU(s) 304 may perform the necessary operations by transitioning from one discrete physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits including registers, adders-subtractors, arithmetic logic units, floating-point units, and the like.

The CPU(s) 304 may be augmented with or replaced by other processing units, such as GPU(s) 305. The GPU(s) 305 may comprise processing units specialized for but not necessarily limited to highly parallel computations, such as graphics and other visualization-related processing.

A user interface may be provided between the CPU(s) 304 and the remainder of the components and devices on the baseboard. The interface may be used to access a random access memory (RAM) 308 used as the main memory in the computing device 300. The interface may be used to access a computer-readable storage medium, such as a read-only memory (ROM) 320 or non-volatile RAM (NVRAM) (not shown), for storing basic routines that may help to start up the computing device 300 and to transfer information between the various components and devices. ROM 320 or NVRAM may also store other software components necessary for the operation of the computing device 300 in accordance with the aspects described herein. The user interface may be provided by one or more electrical components such as the chipset 306.

The computing device 300 may operate in a networked environment using logical connections to remote computing nodes and computer systems through local area network (LAN) 316. The chipset 306 may include functionality for providing network connectivity through a network interface controller (NIC) 322, such as a gigabit Ethernet adapter. A NIC 322 may be capable of connecting the computing device 300 to other computing nodes over a network 316. It should be appreciated that multiple NICs 322 may be present in the computing device 300, connecting the computing device to other types of networks and remote computer systems.

The computing device 300 may be connected to a storage device 328 that provides non-volatile storage for the computer. The storage device 328 may store system programs, application programs, other program modules, and data, which have been described in greater detail herein. The storage device 328 may be connected to the computing device 300 through a storage controller 324 connected to the chipset 306. The storage device 328 may consist of one or more physical storage units. A storage controller 324 may interface with the physical storage units through a serial attached SCSI (SAS) interface, a serial advanced technology attachment (SATA) interface, a fiber channel (FC) interface, or other type of interface for physically connecting and transferring data between computers and physical storage units.

The computing device 300 may store data on a storage device 328 by transforming the physical state of the physical storage units to reflect the information being stored. The specific transformation of a physical state may depend on various factors and on different implementations of this description. Examples of such factors may include, but are not limited to, the technology used to implement the physical storage units and whether the storage device 328 is characterized as primary or secondary storage and the like.

For example, the computing device 300 may store information to the storage device 328 by issuing instructions through a storage controller 324 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope and spirit of the present description, with the foregoing examples provided only to facilitate this description. The computing device 300 may read information from the storage device 328 by detecting the physical states or characteristics of one or more particular locations within the physical storage units.

In addition to or alternatively to the storage device 328 described herein, the computing device 300 may have access to other computer-readable storage media to store and retrieve information, such as program modules, data structures, or other data. It should be appreciated by those skilled in the art that computer-readable storage media may be any available media that provides for the storage of non-transitory data and that may be accessed by the computing device 300.

By way of example and not limitation, computer-readable storage media may include volatile and non-volatile, transitory computer-readable storage media and non-transitory computer-readable storage media, and removable and non-removable media implemented in any method or technology. Computer-readable storage media includes, but is not limited to, RAM, ROM, erasable programmable ROM ("EPROM"), electrically erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage, other magnetic storage devices, or any other medium that may be used to store the desired information in a non-transitory fashion.

A storage device, such as the storage device 328 depicted in FIG. 3, may store an operating system utilized to control the operation of the computing device 300. The operating system may comprise a version of the LINUX operating system. The operating system may comprise a version of the WINDOWS SERVER operating system from the MICROSOFT Corporation. According to additional aspects, the operating system may comprise a version of the UNIX operating system. Various mobile phone operating systems, such as IOS and ANDROID, may also be utilized. It should be appreciated that other operating systems may also be utilized. The storage device 328 may store other system or application programs and data utilized by the computing device 300.

The storage device 328 or other computer-readable storage media may also be encoded with computer-executable instructions, which, when loaded into the computing device 300, transforms the computing device from a general-purpose computing system into a special-purpose computer capable of implementing the aspects described herein. These computer-executable instructions transform the computing device 300 by specifying how the CPU(s) 304 transition between states, as described herein. The computing device 300 may have access to computer-readable storage media storing computer-executable instructions, which, when executed by the computing device 300, may perform methods described in relation to FIG. 2.

A computing device, such as the computing device 300 depicted in FIG. 3, may also include an input/output controller 332 for receiving and processing input from a number of input devices, such as a keyboard, a mouse, a touchpad, a touch screen, an electronic stylus, or other type of input device. Similarly, an input/output controller 332 may provide output to a display, such as a computer monitor, a flat-panel display, a digital projector, a printer, a plotter, or other type of output device. It will be appreciated that the computing device 300 may not include all of the components shown in FIG. 3, may include other components that are not explicitly shown in FIG. 3, or may utilize an architecture completely different than that shown in FIG. 3.

As described herein, a computing device may be a physical computing device, such as the computing device 300 of FIG. 3. A computing node may also include a virtual machine host process and one or more virtual machine instances. Computer-executable instructions may be executed by the physical hardware of a computing device indirectly through interpretation and/or execution of instructions stored and executed in the context of a virtual machine.

One skilled in the art will appreciate that the systems and methods disclosed herein may be implemented via a computing device that may comprise, but are not limited to, one or more processors, a system memory, and a system bus that couples various system components including the processor to the system memory. In the case of multiple processors, the system may utilize parallel computing.

For purposes of illustration, application programs and other executable program components such as the operating system are illustrated herein as discrete blocks, although it is recognized that such programs and components reside at various times in different storage components of the computing device, and are executed by the data processor(s) of the computer. An implementation of service software may be stored on or transmitted across some form of computer- readable media. Any of the disclosed methods may be performed by computer - readable instructions embodied on computer -readable media. Computer -readable media may be any available media that may be accessed by a computer. By way of example and not meant to be limiting, computer-readable media may comprise "computer storage media" and "communications media." "Computer storage media" comprise volatile and non-volatile, removable and non-removable media implemented in any methods or technology for storage of information such as computer- readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by a computer. Application programs and the like and/or storage media may be implemented, at least in part, at a remote system.

Techniques are disclosed that allow enhancing the technical reliability of technical devices on which code should be running. In embodiments, contributors to an open-source repository are reviewed against a risk methodology, based on the attributes of an individual that has been derived to be a contributor to the repository. In embodiments, profiles are created for each such individual, wherein, once a respective profile has been constructed, it may then be run through a novel risk methodology, e.g., looking at various attributes of the individual, their known associations, and/or publications to render an overall risk score for the individual contributor. In embodiments, if the risk score exceeds a predefined threshold, a remedial action can be initiated with respect to code contributed by the individual contributor. This can allow for an improved overall code to be run on the technical devices, thereby allowing to enhance their technical reliability.

As used in the specification and the appended claims, the singular forms "a," "an" and "the" include plural referents unless the context clearly dictates otherwise. Ranges may be expressed herein as from "about" one particular value, and/or to "about" another particular value. Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect.

It will be apparent to those skilled in the art that various modifications and variations may be made without departing from the scope or spirit. Other embodiments will be apparent to those skilled in the art from consideration of the specification and practice disclosed herein. It is intended that the specification and examples be considered as exemplary only, with a true scope and spirit being indicated by the following claims.

## Claims

1. A computer-implemented method, comprising:
obtaining a software repository;
analyzing the obtained software repository to determine individuals who have contributed code to the obtained software repository;
extracting identifying information of the individuals who have been determined to be contributors of code to the obtained software repository;
matching the extracted identifying information of the determined contributors against one or more risk databases;
assigning one or more risk signals to the determined contributors based on the matching;
calculating a risk score for the determined contributors based, at least in part, on the assigned risk signals; and
applying the calculated risk scores for the determined contributors to pre-established risk threshold levels.

2. The method of claim 1, wherein the method further comprises: in response to determining that the calculated risk score of a determined contributor exceeds a pre-established risk threshold level, initiating at least one remedial action with respect to code contributed by the determined contributor.

3. The method of claim 1 or claim 2, wherein the software repository comprises an open-source software repository.

4. The method of any of the preceding claims, wherein analyzing the obtained software repository to determine individuals who have contributed code to the obtained software repository further comprises analyzing one or more of: names, usernames, or email addresses of individuals who have contributed code to the obtained software repository.

5. The method of any of the preceding claims, wherein the identifying information of the individuals who have been determined to be contributors of code to the obtained software repository comprises one or more of: names; email addresses; phone numbers; governmental affiliations; or organizational affiliations.

6. The method of any of the preceding claims, wherein the one or more risk databases comprise one or more of: a resume database; a research publication database; a database of individual affiliations with governmental security organizations; a database of individual affiliations with intelligence agencies; or a database of individual affiliations with cyberterrorism groups.

7. The method of any of the preceding claims, wherein the risk score comprises a quantitative risk score.

8. The method of any of the preceding claims, further comprising: classifying a risk level for each of the determined contributors based on the applying of the respective calculated risk scores to the pre-established risk thresholds.

9. The method of any of the preceding claims, wherein calculating a risk score for the determined contributors further comprises: weighting the respective one or more assigned risk signals for each determined contributor.

10. The method of claim 9, wherein the weighting is based on at least one of: a risk signal frequency; a risk signal impact level; or a type of risk signal.

11. The method of any of the preceding claims, wherein the one or more assigned risk signals comprise at least one of the following:
(a) an indication of a contributor's affiliation with organizations that support particular foreign government actors in recruiting or training personnel for militaries and intelligence services, conducting cyber operations, or contributing to research and development of cyber weapons;
(b) an indication of a contributor's affiliation with particular foreign governmental security or intelligence agencies;
(c) an indication of a contributor's affiliation with an organization that appears on a list of registered defense industry suppliers or bidders maintained by a particular foreign government; or
(d) an indication of a contributor's affiliation with research institutions or universities associated with military research for a particular foreign government.

12. A non-transitory program storage device (NPSD), comprising computer readable instructions executable by one or more processors to:
obtain a software repository;
analyze the obtained software repository to determine individuals who have contributed code to the obtained software repository;
extract identifying information of the individuals who have been determined to be contributors of code to the obtained software repository;
match the extracted identifying information of the determined contributors against one or more risk databases;
assign one or more risk signals to the determined contributors based on the matching;
calculate a risk score for the determined contributors based, at least in part, on the assigned risk signals; and
apply the calculated risk scores for the determined contributors to pre-established risk threshold levels.

13. The NPSD of claim 12, wherein the instructions to analyze the obtained software repository to determine individuals who have contributed code to the obtained software repository further comprise instructions to analyze one or more of: names, usernames, or email addresses of individuals who have contributed code to the obtained software repository.

14. The NPSD of claim 12 or claim 13, wherein the identifying information of the individuals who have been determined to be contributors of code to the obtained software repository comprises one or more of: names; email addresses; phone numbers; governmental affiliations; or organizational affiliations.

15. A system, comprising:
an electronic storage component;
a user interface device; and
one or more processors operatively coupled to the electronic storage component, wherein the one or more processors are configured to execute instructions causing the one or more processors to:
obtain a software repository;
analyze the obtained software repository to determine individuals who have contributed code to the obtained software repository;
extract identifying information of the individuals who have been determined to be contributors of code to the obtained software repository;
match the extracted identifying information of the determined contributors against one or more risk databases;
assign one or more risk signals to the determined contributors based on the matching;
calculate a risk score for the determined contributors based, at least in part, on the assigned risk signals; and
apply the calculated risk scores for the determined contributors to pre-established risk threshold levels.
